# EUROPEAN PATENT APPLICATION

(11) **EP 4 289 643 A1**
(43) Date of publication of application: **13.12.2023**
(21) Application number: 22177873.1
(22) Date of filing: 08.06.2022
(51) Int. Cl.: B60H 1/00, B60H 1/32

(54) **CONVERSION KIT FOR A VEHICLE**

(71) Applicant: MIG Marine, Euclid, Ohio 44117 (US)
(72) Inventor: SPIVAK, Paul, Euclid, OH 44117 (US)
(74) Representative: Ashdown, Matthew

(57) **Abstract**

A conversion kit (150) for a vehicle includes an air conditioner system with a compressor (52), the conversion kit including a DC motor (152); a first replacement belt (156a) operatively couplable to the DC motor; and a mounting member (154) for removably mounting the DC motor (152) to the vehicle such that the first replacement belt can be operatively coupled to the DC motor and compressor (52).

## Description

### FIELD OF INVENTION

The following description relates to a conversion kit for a vehicle and more particularly, a conversion kit for supplying power to an air conditioning system of a motorhome.

### BACKGROUND OF THE INVENTION

Motorhomes are motorized vehicles that include living quarters designed for accommodation such as, for example, a kitchen, a bathroom, and one or more sleeping facilities. Motorhomes and other types of vehicles can include an air conditioning system that can be powered by its engine during transport. However, a person may wish to park a vehicle for an extended period of time while still utilizing its air conditioning system. In such cases, operating the engine to use the air conditioning system can generate undesired noise and deplete fuel needed for transportation. In some examples, a vehicle such as a motorhome can have a separate air conditioner unit for its cabin that can be operated using an alternative source of power (e.g., shoreline power or a generator). However, such systems can be expensive or unfeasible. For instance, shoreline power (particularly in European countries) is typically not powerful enough to operate an air conditioner unit along with other electrical loads of the vehicle.

### BRIEF SUMMARY

In accordance with a first aspect, a conversion kit for a vehicle includes an air conditioner system with a compressor, the conversion kit including a DC motor; a first replacement belt operatively couplable to the DC motor; and a mounting member for removably mounting the DC motor to the vehicle such that the first replacement belt can be operatively coupled to the DC motor and compressor.

In accordance with a second aspect, a conversion kit for a vehicle includes an alternator and a compressor, the conversion kit including a DC motor; a first replacement belt operatively couplable to the DC motor; a second replacement belt operatively couplable to the DC motor and alternator; a mounting member for removably mounting the DC motor to the vehicle such that the first replacement belt can be operatively coupled to the DC motor and compressor and the second replacement belt can be operatively coupled to the DC motor and alternator; and a battery for supplying DC power to the DC motor.

### BRIEF DESCRIPTION OF THE DRAWINGS

Embodiments of the invention are better understood when the following detailed description is read with reference to the accompanying drawings, in which:
FIG. 1 is a perspective view of an example vehicle;
FIG. 2 is a schematic view of an engine compartment of the vehicle; and
FIG. 3 is a schematic view of the engine compartment after an example conversion kit has been installed.

### DETAILED DESCRIPTION

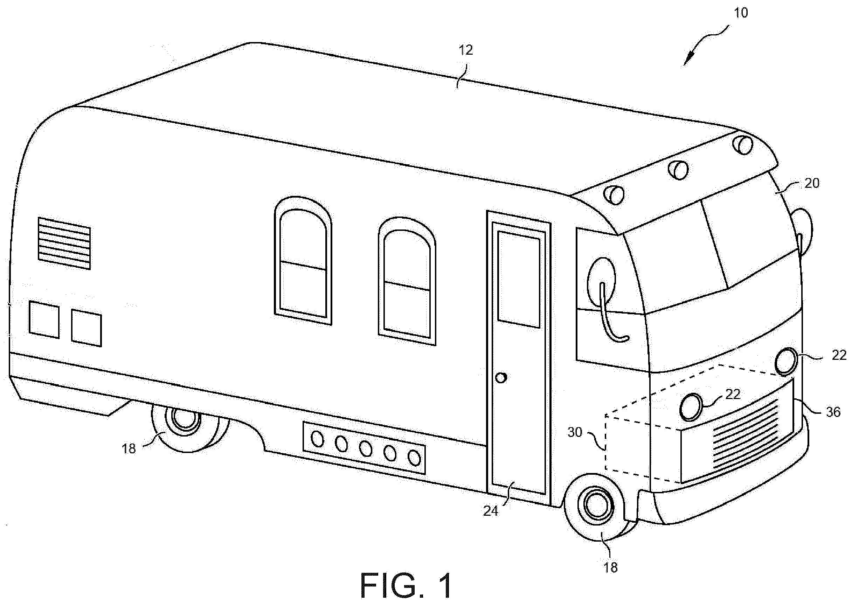

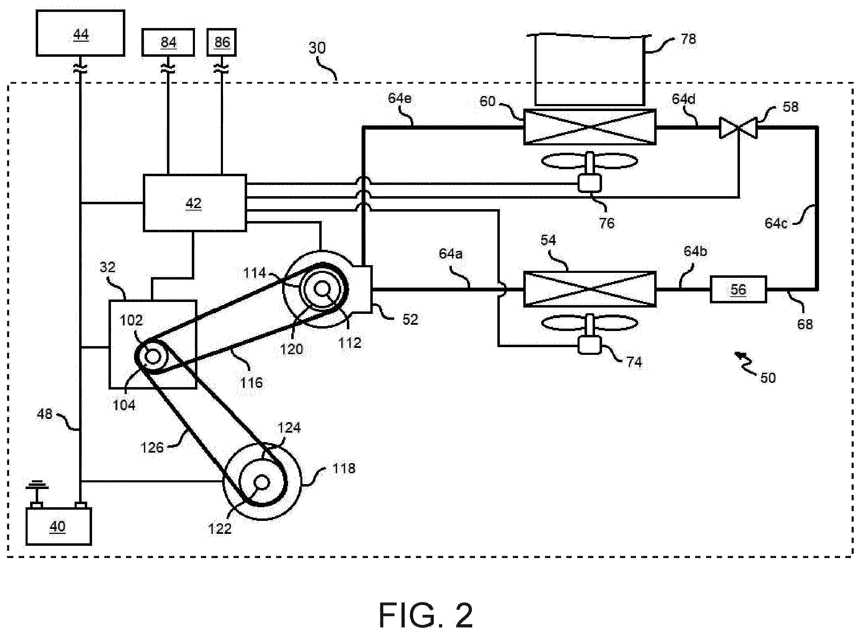

Turning to FIG. 1, a vehicle 10 is shown that includes a cabin 12, a plurality of wheels 18 supporting the cabin 12, a windshield 20 and headlights 22 provided at a front end of the cabin 12, and a door 24 for providing selective access to the interior of the cabin 12. The vehicle 10 in the present example is a motorhome, meaning that it offers one or more mobile living accommodations within the cabin's interior (e.g., a kitchen, a bathroom, and/or one or more sleeping facilities). Moreover, the vehicle 10 includes an engine compartment 30 that contains an engine 32 (see FIG. 2), which can be operated to drive two or more of the wheels 18 to propel the vehicle 10. The vehicle 10 further includes an access panel 36 pivotably mounted to the cabin body, which can be pivoted between open and closed positions to provide selective access to the engine compartment 30.

FIG. 2 shows a schematic view of the engine compartment 30 and various components contained within. As shown in the figure, the vehicle 10 includes a main battery 40 (e.g., 12VDC) for supplying electrical power to various devices of the vehicle 10 including, for example, the engine 32, a controller 42 (e.g., PLC), and one or more loads 44 within the cabin 12 (e.g., refrigerator, stove, television, etc.). The main battery 40 is electrically connected to these devices via a main power line 48, although it is to be appreciated that vehicle 10 can include one or more switches, relays, circuit breakers, etc. electrically connected between the main power line 48 and any device to selectively establish electrical communication between the main battery 40 and device.

The vehicle 10 further includes an air conditioning system 50 having a compressor 52, a condenser 54, a receiver drier 56, an expansion valve 58, and an evaporator 60 that are fluidly coupled to each other via coolant lines 64a-e to form a coolant circuit loop 68 in which a coolant can circulate. The air conditioning system 50 also includes a condenser fan 74 for blowing air across (e.g., through or along) the condenser 54, an evaporator fan 76 for blowing air across (e.g., through or along) the evaporator 60, and a duct 78 that receives the air and delivers it to the cabin's interior.

When the compressor 52 is operated, it will draw low-pressure, low-temperature coolant gas from the coolant line 64e and compress it into a high-pressure, high-temperature gas that is then delivered to the condenser 54 via coolant line 64a. The condenser fan 74 can be operated to blow ambient air from outside the vehicle 10 across the condenser 54, which will reduce the temperature of the coolant and turn it into a high-pressure liquid that is then delivered to the receiver drier 56 via coolant line 64b. The receiver drier 56 will filter out moisture and contaminants from the liquid coolant and deliver the filtered coolant to the expansion valve 58 via coolant line 64c. As the high-pressure liquid coolant passes through the expansion valve 58 into the coolant line 64d, it will expand into a low-pressure liquid that is delivered to the evaporator 60. The low-pressure liquid will boil within the evaporator 60 and turn back into a low-pressure, low-temperature gas, absorbing heat in the process and thus cooling the evaporator 60. The evaporator fan 76 can be operated to blow air (e.g., from outside the vehicle 10 or within the cabin interior) across the evaporator 60, thereby cooling the air before it enters the duct 78 and is delivered to the cabin interior. The low-pressure, low-temperature coolant gas can then be returned to the compressor 52 via coolant line 64e, thereby completing a coolant cycle. The compressor 52 can then be operated again to compress the gas and repeat the cycle as desired.

The controller 42 is operatively coupled to the compressor 52, expansion valve 58, condenser fan 74, and evaporator fan 76 via a plurality of control lines, and can be configured to operate the devices as described above. In particular, the controller 42 can be in communication with a user interface 84 (e.g., control knob(s), switch(es), touchscreen, etc.) and temperature sensor 86 within the cabin 12, and can be configured to operate the compressor 52, expansion valve 58, condenser fan 74, and evaporator fan 76 according to an air conditioning program that is based on, for example, one or more inputs from the user interface 84 (e.g., desired temperature, fan speed, etc.) and feedback from the temperature sensor 86.

The controller 42 is an electrical device that can receive its power from the main power line 48. In some examples, the controller 42 can feed electrical power directly to one or more devices of the air conditioning system 50 for operation thereof. In other examples, one or more devices of the air conditioning system 50 can receive power from another source, and the controller 42 can regulate delivery of that power to control operation of the devices. For instance, the expansion valve 58, condenser fan 74, and evaporator fan 76 can receive electrical power from the main power line 48 via one or more feed lines (not shown) that circumvent the controller 42. In such cases, the controller 42 can be operatively coupled to one or more relays along the feed line(s) to regulate delivery of power to the expansion valve 58, condenser fan 74, and evaporator fan 76.

In the present example, the compressor 52 is configured to be mechanically powered by the engine 32 of the vehicle 10. In particular, the engine 32 includes a drive shaft 102 and a pulley 104 rotatably fixed thereto (for the purposes of this disclosure, the phrase "rotatably fixed" when describing two elements means that they are fixed in rotation relative to each other such that the rotate together). The engine 32 is an internal combustion engine, which can burn liquid fuel (e.g., gasoline) to rotate the drive shaft 102 and pulley 104, although it is to be appreciated that the engine 32 can be powered by other means (e.g., electricity) in other examples.

The compressor 52 similarly includes its own drive shaft 112 and pulley 114, and the pulleys 104, 114 of the engine 32 and compressor 52 are operatively coupled together via a compressor belt 116. As the engine 32 is operated, its drive shaft 102 and pulley 104 will rotate, in turn causing the pulley 114 of the compressor 52 to rotate via the compressor belt 116. Normally, the pulley 114 of the compressor 52 will be disengaged from the drive shaft 112 such that rotation of the pulley 114 does not rotate the drive shaft 112 and operate the compressor 52. However, the compressor 52 includes a clutch 120 that is rotatably fixed to the drive shaft 112 and can be selectively actuated to rotatably fix the drive shaft 112 and pulley 114 together. In particular, the clutch 120 is operatively coupled to the controller 42, which can selectively energize a magnetic actuator of the clutch 120 such that the clutch 120 engages the pulley 114 and thus links the drive shaft 112 and pulley 114 together. Once linked, the drive shaft 112 will rotate with the pulley 114 and provide mechanical energy to the compressor 52 for compressing coolant gas in the coolant circuit 68 as described above. In this manner, the controller 42 can regulate transmission of mechanical power from the engine 32 to the compressor 52 to control operation of the compressor 52.

As discussed above, the main battery 40 of the vehicle 10 can supply electrical power to various devices of the vehicle 10 via the main power line 48. This can include, for example, the engine 32, controller 42, one or more loads 44 within the cabin 12, and any one or more components of the air conditioning system 50. However, as can be appreciated, the main battery 40 can have a finite amount of stored energy that can get depleted after a certain amount of time of powering the vehicle 10. Accordingly, the vehicle 10 further includes an alternator 118, which can be operated to provide an alternative source of electrical power for the vehicle 10 and also recharge the batter 40.

More specifically, the alternator 118 in the present example is configured to be mechanically powered by the engine 32 of the vehicle 10. In particular, the alternator 118 includes a drive shaft 122 and a pulley 124 that are rotatably fixed together. The pulleys 104, 124 of the engine 32 and alternator 118 are operatively coupled together by an alternator belt 126. As the engine 32 is operated, its drive shaft 102 and pulley 104 will rotate, in turn causing the pulley 124 and drive shaft 122 of the alternator 118 to rotate via the alternator belt 126. The alternator 118 is an electrical generator that will convert rotation of the drive shaft 122 into electrical energy that is then fed to the main power line 48. That electrical energy can recharge the main battery 40 and provide power to any loads connected to the main power line 48.

The features of the vehicle 10 described above are well-known in the art, and it will be apparent to those skilled in the art that the features may incorporate changes and modifications without departing from the scope of this disclosure. For instance, although the engine 32 has a single pulley 104 that is operatively coupled to and drives the pulleys 114, 124 of the compressor 52 and alternator 118, the pulley 104 may comprise a first pulley that is operatively coupled to the pulley of the compressor 52 and a second pulley that is coupled to the alternator 118. As another example, the air conditioning system 50 can comprise other arrangements of devices that can be operated to cool air for delivery to the cabin's interior. Moreover, the vehicle 10 itself may be other types of motorized vehicles such as, for example, a sedan, sport utility vehicle, truck, etc. Broadly speaking, the vehicle 10 can be any vehicle having an air conditioning system with a compressor that is mechanically powered via the engine of the vehicle 10 and a belt that operatively couples the engine to the device.

The vehicle 10 as described above thus requires the engine 32 to be running to operate the compressor 52 of the air conditioning system 50 and cool the interior of the cabin 12. This is typically not an issue while the vehicle 10 is in transport and the engine 32 is running. However, a person may wish to park the vehicle 10 for an extended period of time while providing air conditioning for the cabin 12. In such cases, operating the engine 32 to use the air conditioning system 50 can generate undesired noise and deplete fuel needed for transportation. In some examples, the vehicle 10 can have a separate air conditioner unit for the cabin 12 that can be operated using an alternative source of power (e.g., shoreline power or a generator). However, such systems can be expensive or unfeasible. For instance, shoreline power (particularly in European countries) is typically not powerful enough to operate an air conditioner unit along with other electrical loads of the vehicle 10.

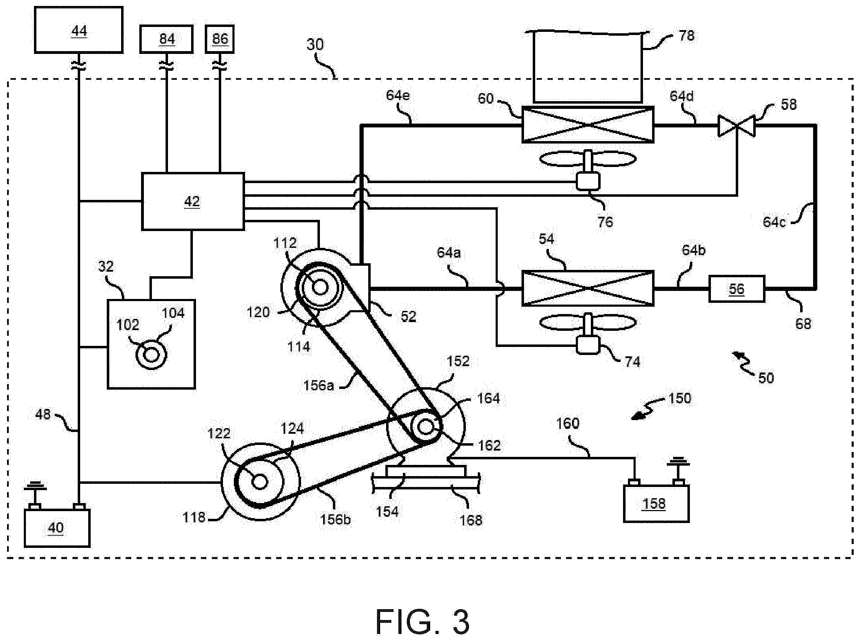

Accordingly, with reference to FIG. 3, a conversion kit 150 will now be described that can be installed to power the air conditioning system 50 and cool the cabin 12 without running the engine 32 and without requiring a separate air conditioner unit. The conversion kit 150 includes a DC motor 152, a mounting member 154, a first replacement belt 156a, a second replacement belt 156b, an auxiliary battery 158 (e.g., 12 VDC), and a power line 160 for supplying power from the battery 158 to the DC motor 152. Moreover, the DC motor 152 can include a drive shaft 162 and a pulley 164 rotatably fixed to the drive shaft 162. FIG. 3 shows the conversion kit 150 as installed in the vehicle 10. Moreover, an example method of installing the conversion kit 150 is described below.

Initially, the vehicle 10 can be configured as described above with respect to FIG. 2. From that configuration, the compressor belt 116 can be decoupled (i.e., removed) from the pulleys 104, 114 of the engine 32 and compressor 52, and the alternator belt 126 can be decoupled (i.e., removed) from the pulleys 104, 124 of the engine 32 and alternator 118, such that the engine 32 will no longer be operable to drive the compressor 52 and alternator 118. Moreover, the DC motor 152 can be mounted to a portion 168 (see FIG. 3) of the vehicle 10 using the mounting member 154.

For example, the portion 168 of the vehicle 10 can be a crossbar or some other rigid structure within the engine compartment 30, and the mounting member 154 can be a bracket that is fixed to the DC motor 152 and portion 168 of the vehicle 10 using one or more fasteners. The portion 168 of the vehicle 10 can be any rigid portion of the vehicle 10 that can provide support for the DC motor 152, and the mounting member 154 can be comprise any one or more elements (e.g., one or more clamps, brackets, fasteners, etc.) that can be utilized to fix the DC motor 152 to the portion 168 of the vehicle 10. Moreover, the mounting member 154 can be integrally formed with the DC motor 152, or the mounting member 154 can be a separate member that is attached to the DC motor 152 using one or more fasteners. In other examples, the conversion kit 150 may exclude the mounting member 154 and the DC motor 152 may be directly mounted to the portion 168 of the vehicle 10.

Once the motor 152 is mounted, the first and second replacement belts 156a, 156b can then be installed to operatively couple the DC motor 152 to the compressor 52 and alternator 118. In particular, the first replacement belt 156a can be operatively coupled to the pulleys 114, 164 of the compressor 52 and DC motor 152, and the second replacement belt 156b can be operatively coupled to the pulleys 124, 164 of the alternator 118 and DC motor 152. Lastly, the auxiliary battery 158 can be electrically coupled to the DC motor 152 via the power line 160.

Once the conversion kit 150 is installed, the DC motor 152 can be energized to power the vehicle 10 and its air conditioning system 50. More specifically, the auxiliary battery 158 can provide electrical power to the DC motor 152 (via power line 160), which will then convert that electrical energy to mechanical energy that rotates its drive shaft 162 and pulley 164. This in turn will rotate the drive shaft 122 and pulley 124 of the alternator 118 via the second replacement belt 156b, causing the alternator 118 to generate electrical power for the main power line 48 and any loads connected thereto, including the controller 42, compressor 52, expansion valve 58, condenser fan 74, and evaporator fan 76. Operation of the DC motor 152 will also rotate the pulley 114 of the compressor 52 via the first replacement belt 156a.

The controller 42 can then operate the air conditioning system 50 as described above to cool the interior of the cabin 12. In particular, controller 42 can selectively operate the compressor 52 of the air conditioning system 50 by actuating its clutch 120 to link the drive shaft 112 with the rotating pulley 114. Once linked, the drive shaft 112 will rotate with the pulley 114 and provide mechanical energy to the compressor 52 for compressing coolant gas in the coolant circuit 68. The coolant will then circulate through the circuit 68 while the controller 42 operates the expansion valve 58, condenser fan 74, and evaporator fan 76 as described above to generate cool air for delivery to the cabin via the duct 78. In this manner, the conversion kit 150 can provide power to the vehicle 10 and its air conditioning system 50 to cool the cabin 12 without running the engine 32 and without requiring a separate air conditioner unit.

As discussed above, the DC motor 152 of the conversion kit 150 can be mounted to a portion 168 of the vehicle 10 using the mounting member 154. Preferably, that portion 168 of the vehicle 10 is predetermined such that when the DC motor 152 is mounted thereto, the motor 152 is properly positioned such that the first and second replacement belts 156a, 156b can be installed on their associated pulleys as described above with proper alignment and tension. Moreover, the mounting member 154 can be configured to mate with that portion 168 of the vehicle 10 to facilitate mounting of the member 154 and DC motor 152 to the portion 168. For instance, one of the mounting member 154 and portion 168 can define a recess or aperture, while the other of the mounting member 154 and portion 168 can have a protuberance that only mates with the recess or aperture when the mounting member 154 is properly located and aligned relative to the portion 168. In this manner, a person can properly locate and align the mounting member 154 relative to the portion 168 by mating them together.

The DC motor 152 in the present embodiment has a single pulley 164 that is operatively coupled to and drives the pulleys 114, 124 of the compressor 52 and alternator 118. However, in other embodiments, the pulley 164 may comprise a first pulley that is operatively coupled to the pulley of the compressor 52 and a second pulley that is coupled to the alternator 118. The pulleys can both be rotatably fixed on and coaxial with the drive shaft 162. Moreover, the pulleys can have similar or different diameters.

The conversion kit 150 is preferably configured such that its components can be removably installed in the vehicle 10. That is, the DC motor 152 and mounting member 154 can be removable mounted to the portion 168 of the vehicle 10, and the first and second replacement belts 156a, 156b can be removably installed on their associated pulleys. In this manner, the conversion kit 150 can be removed from the vehicle 10 and the compressor and alternator belts 116, 126 can be reinstalled to their initial configuration so the vehicle 10 can use the engine 32 to power the vehicle 10 and air conditioning system 50.

In the embodiment described above, the conversion kit 150 includes an auxiliary battery 158 for powering the DC motor 152 and various electrical devices of the vehicle 10. In other examples, the conversion kit 150 can exclude the auxiliary battery 158, and the DC motor 152 can be powered by electrically connecting it to the main battery 40 of the vehicle 10 via the power line 160. In such examples, the main battery 40 can provide electrical power to the DC motor 152 and the rest of the vehicle 10. Moreover, when the main battery 40 provides electrical power to the DC motor 152 and the rest of the vehicle 10, it would be inefficient to use the DC motor 152 to operate the alternator 118. Accordingly, the alternator 118 can remain operatively coupled to the engine 32 via the alternator belt 126, and the conversion kit 150 can exclude the second replacement belt 156b.

As can be seen in FIGS. 2 and 3, most of the features described above for the vehicle 10 and conversion kit 150 are arranged within the engine compartment 30 of vehicle 10 including, for example, the engine 32, main battery 40, controller 42, coolant circuit 68, alternator 118, and all components of the conversion kit 150. When arranged as such, these features can be protected from precipitation, debris, and theft. However, it is to be appreciated that one or more features may be located in other areas of the vehicle 10 and in some cases, outside of the vehicle 10. For instance, the controller 42 may be located in the cabin 12. Moreover, the DC motor 152 and/or the auxiliary battery 158 of the conversion kit 150 may be arranged outside of the vehicle 10 if the engine compartment 30 does not have adequate space for them.

The conversion kit 150 described above can be sold separately from the vehicle 10 and arranged within a single package (e.g., box, crate, etc.) for sale and/or shipment. In this manner, a consumer can purchase the conversion kit 150 and install the kit in the vehicle 10 or other preexisting vehicles. Moreover, multiple conversion kits 150 can be produced and customized for different types of vehicles. For instance, some conversion kits 150 may have different-sized replacement belts 156a, 156b and different mounting members 154 to accommodate vehicles with different engine compartment configurations. In such examples, producing kits 150 with different mounting members 154 can enable the same DC motor 152 to be produced for all the kits and thus scaled.

The conversion kit 150 is particularly useful for motorhomes since it is common for people to gather or dwell in motorhomes while they are parked and the engine is not running. However, it is to be appreciated that the conversion kit 150 can be applied to any type of vehicle having an air conditioning system with a belt-driven compressor.

Illustrative embodiments have been described, hereinabove. It will be apparent to those skilled in the art that the above apparatuses and methods may incorporate changes and modifications without departing from the scope of this disclosure. The invention is therefore not limited to particular details of this disclosure, and will encompass modifications and adaptions thereof within the spirit and the scope of the appended claims.

## Claims

1. A conversion kit for a vehicle comprising an air conditioner system with a compressor, the conversion kit comprising:
a DC motor;
a first replacement belt operatively couplable to the DC motor; and
a mounting member for removably mounting the DC motor to the vehicle such that the first replacement belt can be operatively coupled to the DC motor and compressor.

2. The conversion kit according to claim 1, further comprising a battery for supplying DC power to the DC motor.

3. The conversion kit according to any of claims 1 and 2, wherein:
the vehicle comprises an alternator, and
the conversion kit comprises a second replacement belt that is operatively couplable to the DC motor and alternator when the DC motor is mounted to the vehicle with the mounting member.

4. The conversion kit according to any of claims 1 to 3, wherein the mounting member is configured for removably mounting the DC motor to a predetermined portion of the vehicle.

5. The conversion kit according to claim 4, wherein the mounting member is configured to mate with the predetermined portion of the vehicle.

6. An assembly comprising the conversion kit according to any of claims 1 to 5 and the vehicle, wherein the DC motor is removably mounted to the vehicle via the mounting member, and the first replacement belt is operatively coupled to the DC motor and compressor.

7. The assembly according to claim 6, wherein the conversion kit includes a battery configured to supply DC power to the DC motor.

8. The assembly according to any of claims 6 and 7, wherein:
the vehicle comprises an alternator, and
the conversion kit comprises a second replacement belt that is operatively coupled to the DC motor and alternator.

9. The assembly according to any of claims 6 to 8, wherein the DC motor is removably mounted to a predetermined portion of the vehicle.

10. An assembly comprising:
the conversion kit according to any of claims 1 to 5; and
a single package that contains the conversion kit.

11. A method of installing the conversion kit according to any of claims 1 to 5 in the vehicle, wherein the vehicle initially includes an engine and a compressor belt operatively coupled to the engine and compressor such that the engine is operable to drive the compressor, the method comprising:
decoupling the compressor belt from the engine and compressor such that the engine is not operable to drive the compressor;
mounting the DC motor to the vehicle via the mounting member; and
operatively coupling the first replacement belt to the compressor and DC motor such that the DC motor is operable to drive the compressor.

12. The method according to claim 11, further comprising electrically coupling a battery to the DC motor.

13. The method according to any of claims 11 and 12, wherein the vehicle initially comprises an alternator and an alternator belt operatively coupled to the engine and alternator, and the method comprises:
decoupling the alternator belt from the engine and alternator such that the engine is not operable to drive the alternator; and
operatively coupling a second replacement belt to the DC motor and alternator.

14. The method according to any of claims 10 to 13, wherein the mounting member mates with the predetermined portion of the vehicle.

15. A conversion kit for a vehicle comprising an alternator and a compressor, the conversion kit comprising:
a DC motor;
a first replacement belt operatively couplable to the DC motor;
a second replacement belt operatively couplable to the DC motor and alternator;
a mounting member for removably mounting the DC motor to the vehicle such that the first replacement belt can be operatively coupled to the DC motor and compressor and the second replacement belt can be operatively coupled to the DC motor and alternator; and
a battery for supplying DC power to the DC motor.

## Amended claims

### Amended claims in accordance with Rule 137(2) EPC.

1. A conversion kit (150) for a vehicle (10) comprising a main battery (40), an alternator (118) for charging the main battery (40), and an air conditioner system (50) with a compressor (52), the conversion kit (150) comprising:
a DC motor (152);
a first replacement belt (156a) operatively couplable to the DC motor (152);
a second replacement belt (156b) that is operatively couplable to the DC motor (152); and
a mounting member (154) for removably mounting the DC motor (152) to the vehicle (10) such that the first replacement belt (156a) can be operatively coupled to the DC motor (152) and compressor (52), and the second replacement belt (156b) can be operatively coupled to the DC motor (152) and alternator (118) when the DC motor (152) is mounted to the vehicle (10) with the mounting member (154).

2. The conversion kit according to claim 1, further comprising an auxiliary battery (158) for supplying DC power to the DC motor (152), the auxiliary battery (158) being separate from the main battery (40) of the vehicle (10).

3. The conversion kit (150) according to any of claims 1 to 2, wherein the mounting member (154) is configured for removably mounting the DC motor (152) to a predetermined portion (168) of the vehicle (10).

4. The conversion kit (150) according to claim 3, wherein the mounting member (154) is configured to mate with the predetermined portion (168) of the vehicle (10).

5. An assembly (10, 150) comprising the conversion kit (150) according to any of claims 1 to 4 and the vehicle (10), wherein:
the DC motor (152) is removably mounted to the vehicle (10) via the mounting member (154),
the first replacement belt (156a) is operatively coupled to the DC motor (152) and compressor (52), and
the second replacement belt (156b) is operatively coupled to the DC motor (152) and alternator (118).

6. The assembly (10, 150) according to claim 5, wherein the conversion kit (150) includes an auxiliary battery (158) configured to supply DC power to the DC motor (152), the auxiliary battery (158) being separate from the main battery (40) of the vehicle (10).

7. The assembly (10, 150) according to any of claims 5 to 6, wherein the DC motor (152) is removably mounted to a predetermined portion of the vehicle (10).

8. An assembly (10, 150) comprising:
the conversion kit (150) according to any of claims 1 to 4; and
a single package that contains the conversion kit (150).

9. A method of installing the conversion kit (150) according to any of claims 1 to 4 in the vehicle (10), wherein the vehicle (10) initially includes an engine (32) and a compressor belt (116) operatively coupled to the engine (32) and compressor (52) such that the engine (32) is operable to drive the compressor (52), the method comprising:
decoupling the compressor belt (116) from the engine (32) and compressor (52) such that the engine (32) is not operable to drive the compressor (52);
mounting the DC motor (152) to the vehicle (10) via the mounting member (154); and
operatively coupling the first replacement belt (156a) to the compressor (52) and DC motor (152) such that the DC motor (152) is operable to drive the compressor (52).

10. The method according to claim 9, further comprising electrically coupling an auxiliary battery (158) to the DC motor (152), the auxiliary battery (158) being separate from the main battery (40) of the vehicle (10).

11. The method according to any of claims 9 and 10, wherein the vehicle (10) initially comprises an alternator belt (126) operatively coupled to the engine (32) and alternator (118), and the method comprises:
decoupling the alternator belt (126) from the engine (32) and alternator (118) such that the engine (32) is not operable to drive the alternator (118); and
operatively coupling a second replacement belt (156b) to the DC motor (152) and alternator (118).

12. The method according to any of claims 8 to 11, wherein the mounting member (154) mates with the predetermined portion (168) of the vehicle (10).

13. A method of modifying a vehicle (10) comprising a main battery (40), an alternator (118) for charging the main battery (40), and an air conditioner system (50) with a compressor (52), the method comprising:
removably mounting a DC motor (152) to the vehicle (10) via a mounting member (154);
operatively coupling a first belt (156a) to the compressor (52) and DC motor (152) such that the DC motor (152) is operable to drive the compressor (52); and
operatively coupling a second belt (156b) to the DC motor (152) and the alternator (118) such that the DC motor (152) is operable to drive the alternator (118).

14. The method according to claim 13, further comprising electrically coupling an auxiliary battery (158) to the DC motor (152), the auxiliary battery (158) being separate from the main battery (40) of the vehicle (10).
